# DEMANDE DE BREVET EUROPEEN

(11) **EP 0 759 379 A1**
(43) Date de publication de la demande: **26.02.1997**
(21) Numéro de dépôt: 96401772.7
(22) Date de dépôt: 12.08.1996
(51) Int. Cl.: B60R 13/02

(54) **Dispositif d'étanchéité pour porte de véhicule automobile, destiné à assurer l'étanchéité entre la face d'une porte et un panneau de garniture**

(30) Priorité: 18.08.1995 FR 9509917
(71) Demandeur: DRIME, 92600 Asnières (FR)
(72) Inventeur: Dizay, Yael, 92600 Asnieres (FR)
(74) Mandataire: Jaunez, Xavier

(57) **Abrégé**

Le dispositif d'étanchéité, assurant l'étanchéité entre la face intérieure d'une porte (3) et un panneau de garniture (8) fixé de manière démontable sur cette porte, consiste en un cordon d'étanchéité (20) en mousse synthétique hydrophobe, présentant une facette de fixation (21) rendue adhésive par chauffage localisé et une facette d'appui (22) non adhésive. Le cordon est fixé à demeure par sa facette de fixation (21) sur un contour associé (23), et il est en outre dimensionné pour être comprimé lorsque le panneau de garniture (8) est fixé. La facette de fixation (21) du cordon (20) est de préférence rendue adhésive par flammage préalable du contour associé (23).

## Description

La présente invention concerne un dispositif d'étanchéité pour porte de véhicule automobile, et plus particulièrement un dispositif destiné à assurer l'étanchéité entre la face intérieure d'une porte du véhicule et panneau de garniture qui est fixé de manière démontable sur cette porte.

Les panneaux de garniture formant revêtement d'habillage intérieur d'une porte de véhicule automobile sont fixés de manière démontable sur la porte associée, par vissage ou au moyen de clips de maintien. Le caractère démontable de tels panneaux s'impose pour pouvoir effectuer une intervention sur le ou les mécanismes intégrés dans la porte, c'est-à-dire dans le caisson délimité par les panneaux intérieur et extérieur de cette porte, par exemple les mécanismes de lève-glace.

L'étanchéité des portes au niveau des panneaux de garniture s'effectue habituellement soit directement au moyen d'un cordon de mastic périphérique, soit par une feuille thermoformée collée par un cordon de colle périphérique.

Dans la première solution, un cordon de mastic périphérique est déposé en usine sur le caisson de porte. La pose s'effectue manuellement au pistolet, après quoi il faut rapidement mettre en place le panneau de garniture avant que le mastic ne sèche, car le mastic est un matériau très collant. Outre le caractère fastidieux de la pose d'un tel cordon, et éventuellement délicat si cette pose est réalisée sur une porte déjà montée, cette solution présente un autre inconvénient important inhérent à la nécessité de pouvoir démonter le panneau de garniture. En effet, lors du démontage du panneau de garniture, le cordon de mastic est toujours plus ou moins arraché, ce qui entraîne sa destruction partielle ou totale. Par suite, il est nécessaire, avant de remonter le panneau de garniture, de gratter ou couper les résidus de cordon en place, et de nettoyer le contour associé du caisson de porte, afin de pouvoir poser un nouveau cordon de mastic. Ceci entraîne un coût non négligeable pour les opérations de montage et de démontage des panneaux de garniture, et peut en outre entraîner la détérioration de ces panneaux et par suite la nécessité de les remplacer.

Dans la deuxième solution, une feuille thermoformée est collée sur le caisson de porte au moyen d'un cordon de colle périphérique. Cette feuille thermoformée a un dimensionnement comparable à celui du panneau de garniture, lequel est fixé ensuite en venant coiffer directement ladite feuille préalablement collée. Cette solution présente l'avantage par rapport à la solution précédente de permettre le démontage du panneau de garniture sans endommager la feuille thermoformée. Cependant, elle présente un inconvénient notable lorsqu'il est nécessaire d'accéder aux mécanismes intégrés dans la porte : en effet, cette feuille constitue un cache complet qu'il est nécessaire de détruire pour accéder à ces mécanismes. On retrouve alors les inconvénients consistant à enlever la feuille thermoformée, et à nettoyer ensuite le contour associé du caisson de porte afin de pouvoir coller une nouvelle feuille thermoformée une fois la réparation ou le réglage effectué, avant de pouvoir remonter le panneau de garniture. Le coût d'une telle intervention est donc important.

Pour compléter l'état de la technique, on peut aussi mentionner les documents DE-A-35 10 018, DE-A-35 02 056, US-A-5,042,821 et GB-A-1 279 846.

Les documents DE-A-3510018 et DE-A-3502056 décrivent un système d'étanchéité pour porte de véhicule, constitué par un panneau intermédiaire en mousse de polyuréthane garni du côté extérieur d'une feuille étanche à l'eau. Le panneau de garniture est par ailleurs agrafé sur la carrosserie.

Le document US-A-5,042,821 décrit un joint pour vitre de scanner optique, en mousse de silicone hydrophobe, qui est fixé par collage ou par encastrement dans une gorge.

Le document GB-A-1.279.846 décrit enfin une bande laminée servant à fixer directement le panneau de garniture sur une porte de véhicule, afin d'éviter les clips ou attaches mécaniques.

L'invention vise précisément à résoudre ce problème en concevant un dispositif d'étanchéité ne présentant pas les inconvénients précités.

L'invention a ainsi pour objet de réaliser un dispositif d'étanchéité permettant de réaliser aisément et avec un coût d'intervention minimal la pose et la dépose d'un panneau de garniture, et ce sans aucunement barrer l'accès aux mécanismes qui sont intégrés dans la porte.

Il s'agit plus particulièrement d'un dispositif d'étanchéité pour porte de véhicule automobile, destiné à assurer l'étanchéité entre la face intérieure d'une porte et un panneau de garniture qui est fixé de manière démontable sur cette porte, caractérisé en ce qu'il consiste en un cordon d'étanchéité en mousse synthétique hydrophobe, présentant une facette de fixation rendue adhésive par chauffage localisé et une facette d'appui non adhésive, ledit cordon étant fixé à demeure par sa facette de fixation sur un contour associé appartenant soit à la face intérieure de la porte soit au panneau de garniture, et étant en outre dimensionné pour être comprimé entre ces deux éléments lorsque le panneau de garniture est fixé.

Ainsi, grâce à la présence de la facette d'appui non adhésive du cordon de mousse, la dépose et la pose ultérieure du panneau de garniture s'effectuent aisément et rapidement, sans avoir à intervenir sur ce cordon de mousse. Si le cordon de mousse est solidaire du panneau de garniture, il est automatiquement enlevé avec le panneau de garniture sans laisser subsister de résidus de cordon sur la face intérieure de la porte. Si le cordon de mousse est au contraire solidaire de la face intérieure de la prote, la dépose du panneau de garniture s'effectue aisément sans laisser subsister de résidus de cordon sur ce panneau de garniture.

De préférence, la mousse synthétique constitutive du cordon d'étanchéité est choisie pour être non-adhésive et souple dans une gamme de températures correspondant aux températures extérieures habituellement rencontrées, et pour être rendue collante par chauffage à une température dépassant largement la valeur supérieure de cette gamme.

Avantageusement, la facette de fixation du cordon d'étanchéité est rendue adhésive par flammage préalable du contour associé. Il peut aussi s'avérer intéressant de prévoir que le contour associé présente au moins une saillie en relief visant à faciliter la pose du cordon d'étanchéité.

A titre d'exemple préférentiel, la mousse synthétique constitutive du cordon d'étanchéité est une mousse en élastomère modifié polyester ou une mousse en polyuréthanne.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre une porte de véhicule équipée du côté intérieur d'un panneau de garniture, avec un dispositif d'étanchéité conforme à l'invention ;
- la figure 2 est une coupe partielle selon II-II de la figure 1, à une échelle agrandie, montrant le cordon de mousse synthétique hydrophobe comprimé entre la face intérieure (ou panneau intérieur) de la porte et la face du panneau de garniture en regard, ledit cordon étant ici solidaire du panneau de garniture ;
- les figures 3a, 3b, 3c sont des vues schématiques en coupe illustrant la pose d'un tel cordon de mousse sur le panneau de garniture, puis le montage du panneau ainsi équipé sur la face intérieure de la porte, aboutissant à la représentation de la figure 2 ;
- la figure 4 illustre une variante de l'agencement de la figure 2, dans laquelle le cordon de mousse est solidaire de la face intérieure de la porte ;
- les figures 5a, 5b, 5c sont des vues schématiques analogues à celles des figures 3a, 3b, 3c, illustrant en variante la pose d'un tel cordon de mousse sur la face intérieure de la porte, puis le montage du panneau de garniture sur la face intérieure ainsi équipée de la porte, aboutissant à la représentation de la figure 4.

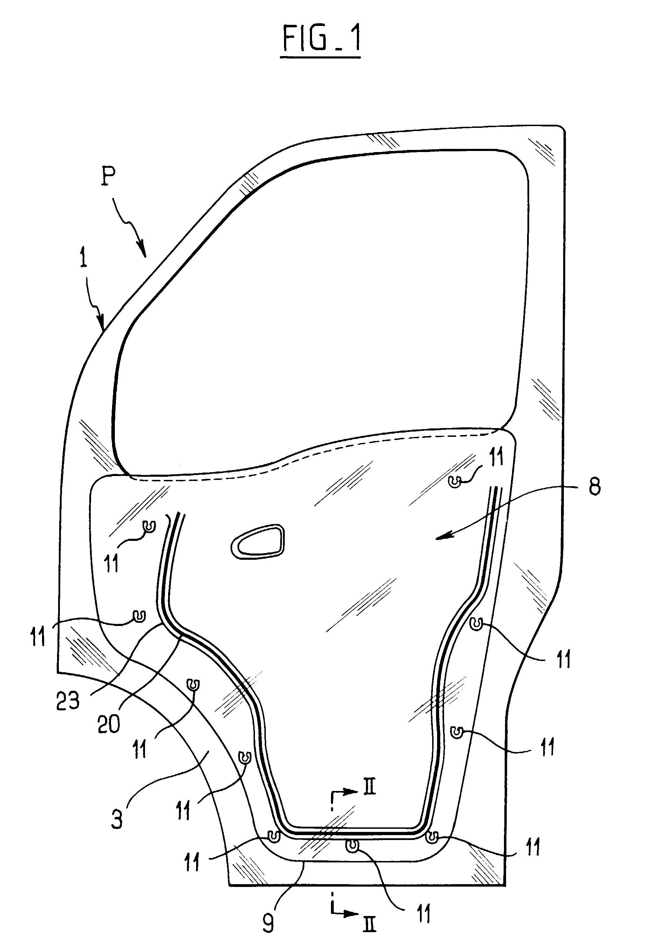

La figure 1 permet de distinguer une porte de véhicule P dont le caisson 1 est équipé du côté intérieur d'un panneau de garniture 8 dont le bord périphérique 9 est ici cintré vers la face intérieure de la porte. La figure 1 permet de voir, par transparence à travers le panneau de garniture 8, une série de clips de maintien 11 de type traditionnel, servant à fixer de manière démontable le panneau de garniture 8 sur le caisson de porte 1. L'étanchéité entre la face intérieure 3 de la porte et le panneau de garniture 8 est assurée par un cordon d'étanchéité 20 que l'on voit également par transparence, et qui est en mousse synthétique hydrophobe. Ce cordon d'étanchéité 20 s'étend selon un profil déterminé qui dépend de la géométrie de la porte concernée, comme c'était d'ailleurs le cas pour le cordon d'étanchéité en mastic utilisé dans les techniques antérieures. De préférence, les clips de maintien 11 seront disposés au voisinage du profil suivi par le cordon d'étanchéité 20, afin d'assurer une compression régulière et fiable dudit cordon. Le panneau de garniture 8 couvre ainsi la majeure partie de la face intérieure de la porte, et ce panneau de garniture est habituellement réalisé en matière plastique injectée ou thermoformée.

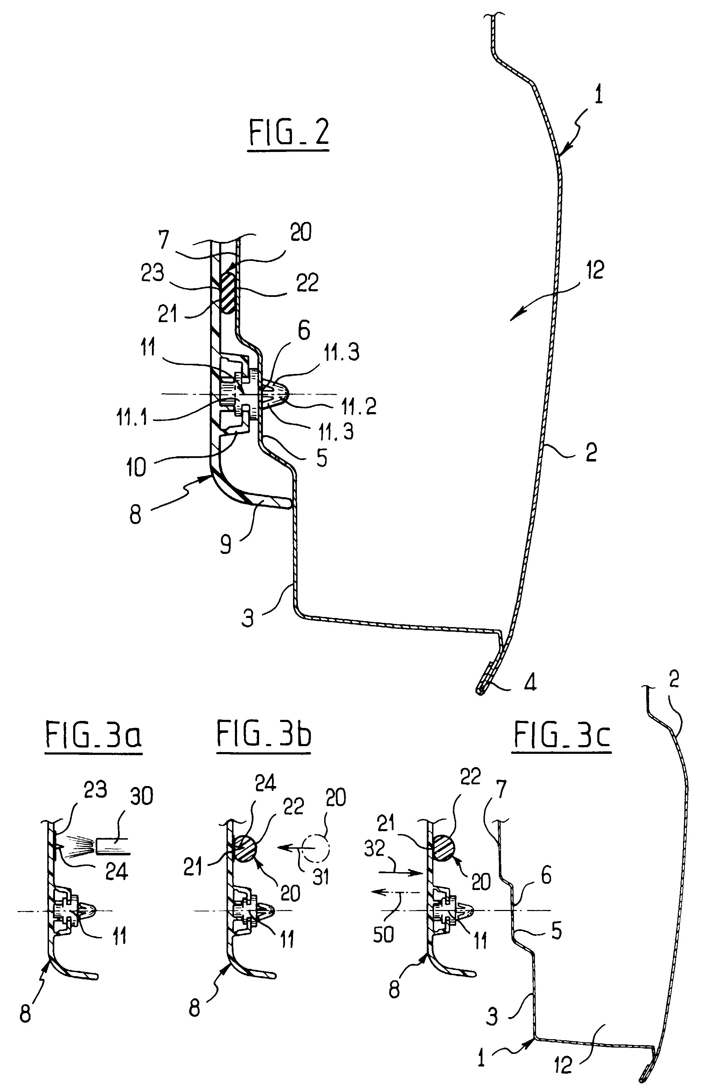

La figure 2 permet de mieux distinguer la liaison mécanique entre le panneau de garniture et la face intérieure de la porte de véhicule, ainsi que le cordon d'étanchéité en mousse synthétique hydrophobe qui est comprimé entre ces deux éléments.

On distingue ainsi sur la figure 2 la partie inférieure du caisson de porte 1, ledit caisson étant réalisé par assemblage d'un panneau extérieur 2 et d'un panneau intérieur 3, ces deux panneaux se rejoignant inférieurement au niveau d'une feuillure 4 et définissant un espace intérieur noté 12 qui peut être utilisé pour loger divers équipements ou mécanismes, par exemple le mécanisme lève-glace de la porte. Le panneau intérieur 3 peut présenter une géométrie particulière qui est propre à chaque porte de véhicule concerné. Ce panneau intérieur 3 présente ici une première portion emboutie 5 présentant une série de trous 6 associés aux moyens de fixation démontable du panneau de garniture 8. Le panneau 8, qui se termine inférieurement par un retour 9 dirigé vers le panneau intérieur de la porte 3, est ici fixé par des clips de maintien 11, mais on pourrait aussi assurer la fixation du panneau par vissage. Les clips de maintien tels que celui qui est illustré sur la figure 2, ont cependant l'avantage d'être invisibles de l'intérieur, en étant réalisés en matière plastique pour un coût minimal. Chaque clip 11 présente ici une tête 11.1 qui est enserrée dans des reliefs 10 venus de moulage avec le panneau de garniture 8, et une pointe 11.2 dimensionnée pour passer par l'un des trous 6 précités, cette pointe présentant deux branches élastiques d'accrochage 11.3 qui s'écartent une fois le clip de maintien 11 suffisamment enfoncé en assurant ainsi la solidarisation par encliquetage du panneau de garniture 8 avec le panneau intérieur 3 de la porte.

Conformément à une caractéristique essentielle de l'invention, l'étanchéité entre la face intérieure 3 de la porte et le panneau de garniture 8 est assurée par un cordon d'étanchéité 20 en mousse synthétique hydrophobe, présentant une facette de fixation 21 qui est rendue adhésive par chauffage localisé, et une facette d'appui 22 non adhésive. Dans le mode de réalisation illustré sur la figure 2, la facette de fixation 21 est tournée du côté du panneau de garniture 8, alors que la facette d'appui non adhésive est tournée vers le panneau intérieur de la porte. Par suite, le cordon d'étanchéité 20 en mousse synthétique hydrophobe est solidaire du panneau de garniture 8. Le cordon d'étanchéité 20 est fixé à demeure par sa facette de fixation 21 sur un contour associé 23 du panneau de garniture 8, et il est en outre dimensionné pour être comprimé entre le panneau de garniture 8, et la partie en regard 7 du panneau intérieur de porte, cette partie en regard 7 étant ici réalisée sous la forme d'un embouti de tôle.

Grâce à la présence de la facette d'appui non-adhésive 22 du cordon d'étanchéité 20 réalisée en mousse synthétique hydrophobe, la dépose du panneau de garniture 8 s'effectue aisément sans laisser subsister de résidus de cordon sur la face intérieure 3 de la porte. Lorsque le panneau de garniture 8 est enlevé, le cordon 20 qui l'accompagne reprend sa forme naturelle en se détendant, tout en restant solidaire dudit panneau par sa facette de fixation 21. A la pose ultérieure du panneau de garniture 8, le cordon d'étanchéité 20 est de nouveau appliqué par sa facette d'appui 22 non-adhésive contre la face intérieure de la porte, en étant comprimé entre le panneau 8 et la face intérieure 3 lorsque le panneau est à nouveau fixé par ses clips de maintien 11. Ainsi, le cordon d'étanchéité 20 en mousse synthétique hydrophobe n'a pas besoin d'être remplacé à chaque intervention de pose/dépose du panneau de garniture 8.

De préférence, la mousse synthétique constitutive du cordon d'étanchéité 20 sera choisie pour être non-adhésive et souple dans une gamme de températures correspondant aux températures extérieures habituellement rencontrées, et pourra être rendue collante par chauffage à une température dépassant largement la valeur supérieure de cette gamme. Grâce à ce choix judicieux, le cordon d'étanchéité 20 en mousse synthétique hydrophobe est fixé de façon fiable et durable par sa facette de fixation 21, et le restant de sa surface périphérique, et donc en particulier la facette d'appui 22, est par nature non-adhésive. Avec un autre type de mousse synthétique hydrophobe, qui serait légèrement collante sur sa surface extérieure, il conviendrait de rapporter au niveau de la facette d'appui du cordon un ruban anti-adhésif, par exemple en silicone ou en polytétrafluoréthylène. Cependant, cette variante serait moins satisfaisante dans la mesure où elle exigerait un élément d'apport supplémentaire.

On obtiendra des résultats très satisfaisants en choisissant comme mousse synthétique constitutive du cordon d'étanchéité 20 une mousse en élastomère modifié polyester, ou encore une mousse en polyuréthanne. A titre d'exemple, on pourra utiliser la mousse en élastomère modifié polyester qui est commercialisée sous la marque DYNAFOAM par la société NORTON en Belgique.

Conformément à un mode d'exécution préféré, la facette de fixation 21 du cordon d'étanchéité 20 en mousse synthétique hydrophobe est rendue adhésive par flammage préalable du contour associé 23.

Les vues schématiques des figures 3a, 3b, 3c servent à expliquer la pose d'un tel cordon de mousse sur le panneau de garniture par flammage préalable du contour associé :
- Figure 3a : le contour associé 23 de la face interne du panneau de garniture 8 est exposé à un flammage par une buse 30 dont le mouvement qui est effectué selon un plan parallèle au plan du panneau de garniture est compatible avec une automatisation et une commande par robot. On distingue également sur la figure 3a une saillie en relief 24, qui peut être ponctuelle ou réalisée sous la forme d'une ligne continue, laquelle saillie vise à faciliter la pose et le maintien en place du cordon d'étanchéité 20.
- Figure 3b : après le flammage du contour 23, qui a pour effet de réchauffer la surface concernée sans naturellement la déformer, le cordon de mousse synthétique hydrophobe 20 est déposé sur ce contour 23, et le contact avec la surface échauffée du panneau de garniture 8 a pour effet de rendre immédiatement adhésive par fusion localisée la facette de fixation 21 du cordon 20, lequel cordon se gonfle légèrement sous l'effet de la chaleur. La facette de fixation 21 est rectiligne, et le restant du contour en section du cordon 20 est sensiblement circulaire. La flèche 31 schématise la pose du cordon d'étanchéité 20, cette pose s'effectuant dans la pratique par un pistolet de type traditionnel, qui peut être monté sur un robot, et en particulier un robot portant déjà la buse de flammage 30 précitée, de telle façon que les deux opérations de flammage et de pose de cordon puissent s'effectuer immédiatement l'une à la suite l'autre, et de façon automatisable.
- Figure 3c : le cordon d'étanchéité 20 étant fixé à demeure sur le panneau de garniture 8, ce panneau est amené en position par rapprochement frontal, comme schématisé par la flèche 32, vers le panneau intérieur 3 de la porte, avec la facette d'appui 22 non-adhésive tournée vers l'embouti de tôle 7, jusqu'à l'encliquetage du panneau de garniture 8 par ses clips de maintien 11, aboutissant ainsi à la représentation de la figure 2. La flèche en traits mixtes 50 indique que la dépose du panneau de garniture 8 portant son cordon d'étanchéité 20 s'effectue aisément dans la direction opposée, le cordon d'étanchéité reprenant alors sa forme naturelle illustrée sur la figure 3c.

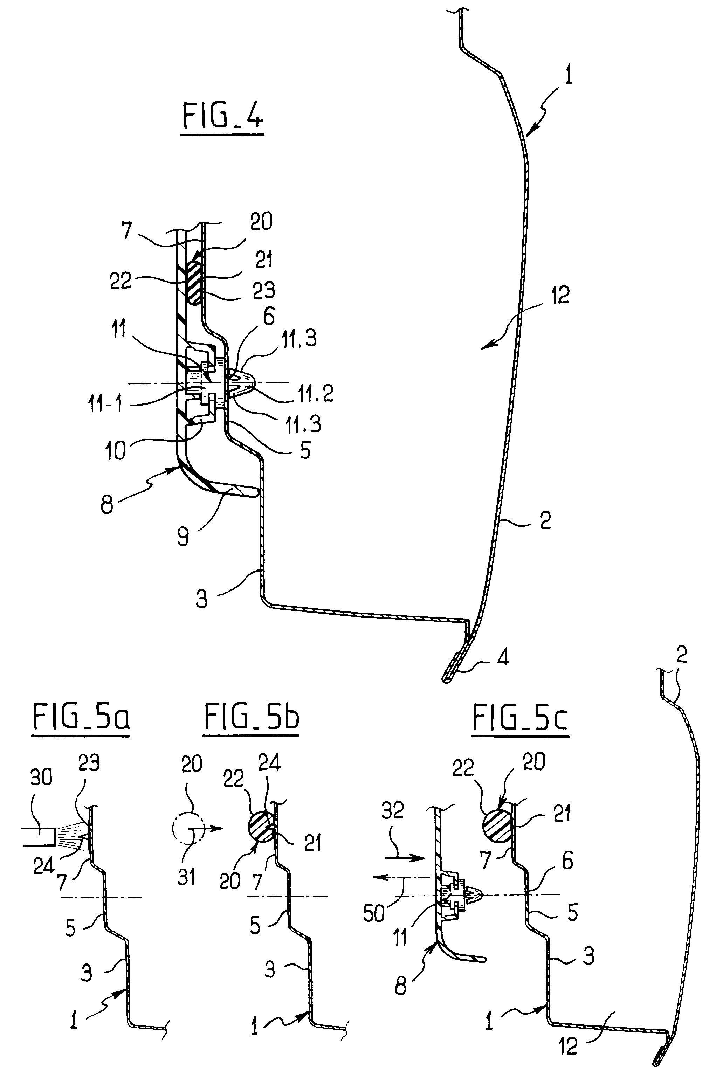

La figure 4 illustre une variante de l'agencement de la figure 2, dans laquelle le cordon de mousse synthétique hydrophobe est solidaire non plus du panneau de garniture mais de la face intérieure de la porte.

Ainsi, la seule différence avec le mode de réalisation de la figure 2, réside dans le fait que le contour associé 23 est sur l'embouti de tôle 7 du panneau intérieur de porte 3, et la facette de fixation 21 du cordon d'étanchéité 20 est tournée vers ce panneau intérieur de porte, tandis que la facette d'appui 22 non-adhésive est alors tournée vers le panneau de garniture 8. Comme précédemment, grâce à la présence de la facette d'appui non-adhésive 22 du cordon d'étanchéité 20 en mousse synthétique hydrophobe, le contact avec le panneau de garniture 8 se limite à un contact d'appui servant à comprimer le cordon entre le panneau 8 et le panneau intérieur de porte 3. La dépose et la pose ultérieure du panneau de garniture 8 s'effectuent là encore aisément et rapidement, sans avoir à intervenir sur le cordon de mousse 20. Lorsque le panneau de garniture 8 est déposé, le cordon de mousse 20 reste en place sur le panneau intérieur de porte, sans la moindre présence de résidus de mousse sur la face intérieure du panneau de garniture 8.

Les vues schématiques des figures 5a, 5b, 5c, sont analogues à celles des figures 3a, 3b, 3c déjà décrites, et visent à illustrer la pose du cordon d'étanchéité en mousse synthétique hydrophobe sur la face intérieure de la porte, et le montage du panneau de garniture sur la face intérieure ainsi équipée :
- Figure 5a : le contour associé 23 de l'embouti de tôle 7, présentant ici aussi une saillie en relief 24, analogue à la saillie en relief précitée, est soumis à un flammage direct par une buse 30, afin de réchauffer la surface concernée sur laquelle doit être déposé le cordon d'étanchéité.
- Figure 5b : le cordon d'étanchéité 20 en mousse synthétique hydrophobe est posé directement sur le contour associé 23 échauffé, ce qui provoque une fusion localisée de la facette de fixation 21 venant au contact de l'embouti de tôle 7, la facette extérieure 22 étant quant à elle non-adhésive. Là encore, la flèche 31 schématise la pose de ce cordon 20, effectuée de préférence au moyen d'un pistolet monté sur un robot dont le déplacement est programmé.
- Figure 5c : le panneau de garniture 8 est amené frontalement, comme schématisé par la flèche 32, en direction du panneau intérieur de porte 3 qui est équipé de son cordon d'étanchéité 20, pour aboutir finalement à la représentation de la figure 4. La flèche en traits mixtes 50 rappelle que la dépose du panneau de garniture 8 laisse en place le cordon d'étanchéité 20 sur la face intérieure de la porte, ledit cordon reprenant alors sa forme qui est illustrée sur la figure 5c.

On est ainsi parvenu à réaliser un dispositif d'étanchéité permettant de réaliser aisément et à un coût d'intervention minimal la pose et la dépose d'un panneau de garniture, tout en permettant l'accès aux mécanismes intégrés dans la porte, et ce sans détérioration du panneau et de son dispositif d'étanchéité.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif d'étanchéité pour porte de véhicule automobile, destiné à assurer l'étanchéité entre la face intérieure d'une porte (3) et un panneau de garniture (8) qui est fixé de manière démontable sur cette porte, caractérisé en ce qu'il consiste en un cordon d'étanchéité (20) en mousse synthétique hydrophobe, présentant une facette de fixation (21) rendue adhésive par chauffage localisé et une facette d'appui (22) non adhésive, ledit cordon étant fixé à demeure par sa facette de fixation sur un contour associé (23) appartenant soit à la face intérieure de la porte (3) soit au panneau de garniture (8), et étant en outre dimensionné pour être comprimé entre ces deux éléments lorsque le panneau de garniture est fixé.

2. Dispositif d'étanchéité selon la revendication 1, caractérisé en ce que la mousse synthétique constitutive du cordon d'étanchéité (20) est choisie pour être non-adhésive et souple dans une gamme de températures correspondant aux températures extérieures habituellement rencontrées, et pour être rendue collante par chauffage à une température dépassant largement la valeur supérieure de cette gamme.

3. Dispositif selon la revendication 1 ou la revendication 2, caractérisé en ce que la facette de fixation (21) du cordon d'étanchéité (20) est rendue adhésive par flammage préalable du contour associé (23).

4. Dispositif selon la revendication 3, caractérisé en ce que le contour associé (23) présente au moins une saillie en relief (24) visant à faciliter la pose du cordon d'étanchéité (20).

5. Dispositif selon l'une des revendications 1 à 4, caractérisé en ce que la mousse synthétique constitutive du cordon d'étanchéité (20) est une mousse en élastomère modifié polyester.

6. Dispositif selon l'une des revendications 1 à 4, caractérisé en ce que la mousse synthétique constitutive du cordon d'étanchéité (20) est une mousse en polyuréthanne.
